# EUROPEAN PATENT SPECIFICATION

(11) **EP 2 305 441 B1**
(45) Date of publication and mention of the grant of the patent: **31.08.2011**
(21) Application number: 09400048.6
(22) Date of filing: 30.09.2009
(51) Int. Cl.: B29C 43/02, B29C 43/12, B29C 70/44, B29C 70/54

(54) **Controlled circumferential rotating impregnation device**
Vorrichtung zur gesteuerten, umlaufenden, rotierenden Imprägnierung
Dispositif d'imprégnation rotative circonférentielle contrôlée

(43) Date of publication of application: 06.04.2011
(73) Proprietor: Eurocopter Deutschland GmbH, 86609 Donauwörth (DE)
(72) Inventor: Meyer-Noack, Sven, 86609 Donauwörth (DE); Radekopf, Jörg, 86663 Asbach Bäumenheim (DE)
(74) Representative: Pouillot, Laurent Pierre Paul

(56) References cited:
- EP-A1- 1 674 245
- WO-A1-2010/007162
- US-A- 5 672 227

## Description

The present invention refers to the general technical field of making structures in reinforced composite materials, particularly materials based on matrix impregnated fibres and/or matrix impregnated textile materials. These structures are often constituted from an assembly of laminar reinforcement layers among which are found, for example, "stratifil" (also known as roving).

Reinforced parts are, for example, used in aeronautics in general and particularly in the fabrication of aircraft elements or parts, of the rotor, propeller or transmission shaft type or other hollow parts presenting large dimensions.

Impregnation matrixes are known as such and thus will not be described in detail.

Reinforcement fibre is understood to refer to all materials presenting carbon fibres, glass fibres, aramid fibres or hybrid-thermoplast/carbon, glass, aramid fibres or other fibres.

Reinforcement textile or fabric is understood to refer to all materials presenting wovens, non wovens, multi axial non wovens, braided goods of materials such as mentioned above, knitted fabrics, mesh work or randomly oriented fibres.

Different molding methods by liquid matrix impregnation are known. In these methods, generally a preform of the semifinished product/textile type is impregnated, and is covering a mold core. Using preimpregnated materials, known as "Prepreg" is also known, but the latter present the disadvantage of manufacturing, handling and storage costs that are often high.

The wording "matrix" which is well known, is generally used in the following, but the term "resin" which is more specific can also be used without departing from the invention.

Making laminar layers manually is also known. The operator turns the parts, for example large-size hollow cylindrical parts, and manually applies the matrix onto the fibres. These operations are in many cases difficult to automate and consequently are not reproducible either in terms of dimensional accuracy or physical properties. In addition, it is often necessary to manually perform jointing operations between different parts of the pieces.

In standard impregnation methods, one is often confronted with the phenomenon known as "Race-Tracking," in which a preferential circulation of matrix is produced, for example along a junction of laminar layers or in a layer presenting a lower fibre density. The matrix flow is then not homogeneous. This phenomenon generally leads to poor impregnation of some parts, for example, the inner layers and/or more dense layers. When this phenomenon is produced, the result is a defective piece that is destined to be destroyed.

From among these known impregnation methods, one may cite, for example, the RTM (Resin Transfer Molding) impregnation method, in which very rigid and heavy mold parts are used to resist the high and necessary pressures to close said mold and to prevent the appearance of deformations. When using a preform, the matrix should traverse all of said preform before impregnating the last fibres of said preform.

The "Race Tracking" phenomenon may occur, particularly when the preform is a laminar construction presenting different permeabilities. With the use of high pressure, it may happen, in addition, that the fibres are displaced under the effect of said pressure.

It may also happen that the use of a non-parallel mold would locally lead to undesired compaction of the material constituting the piece to mold.

In addition, in RTM impregnation methods, one is often confronted with an insufficient evacuation of air contained in the mold.

Conventional fibre winding and weaving methods generally are not adapted for manufacturing pieces that must absorb high impact forces.

In known impregnation methods, often an impregnation medium or means that surrounds the piece that must be impregnated is used to obtain progressive impregnation. This medium, as well as the matrix that it contains, generally is not reusable and leads to, first, significant matrix losses and, second, environmental problems linked to the reprocessing of said medium.

WO 2010007162(A1) discloses a hollow body of fibre plastic composite and the preparation of a preform assembly in the form of a braid of dry reinforcing fibres braided, using a braiding technique, around a self-supporting soluble core. The soluble core is manufactured from a liquid-dispersible shaping material. The manufacturing comprises the impregnation of the reinforcing fibres with curable matrix material in the resin-infusion process, i.e. the matrix material is sucked into a space by the action of reduced pressure, said space being delimited without solid negative mould tooling by a vacuum film. After partial or full curing of the matrix material, the soluble core is removed by dissolution with liquid

More particularly, the present invention relates to an impregnation device used in the manufacturing of structures or pieces in- composite materials, reinforced by fibres or textiles and, particularly, hollow pieces such as hollow drive shafts.

Thus, the object of the present invention is to propose a device that allows one to be free from the limitations mentioned above.

The object of the present invention is to propose an impregnation device allowing automation of impregnation operations by reducing the number of defective pieces.

Another object of the present invention is to propose an impregnation device allowing impregnation operations to be simplified and the cost to be reduced.

The objects assigned to the invention are reached by using a device for molding by impregnation of at least one reinforcing layer constituting a piece to be molded or at least one reinforcing layer covering a piece, with a matrix in liquid form, said device comprising a mold extending around the reinforcing layer by defining a matrix-circulation space, at least one end piece for supplying matrix into the matrix-circulation space, at least one surplus matrix evacuation end piece as well as means to generate a flow of matrix in the matrix-circulation space, characterized in that the mold comprises a flexible conduit and compression means applied to the outer surface of the flexible conduit, to circumferentially compress the matrix-circulation space, according to the impregnation parameters, thus promoting impregnation of the reinforcing layer.

According to an example of embodiment of the device in conformance with the invention, the flexible conduit is an elastomer.

According to an example of embodiment of the device in conformance with the invention, the flexible conduit defines a free inner space, substantially cylindrical before the compression of said flexible conduit, for the engagement of an element or of a piece of the mold core type covered by a reinforcing layer.

According to an example of embodiment of the device in conformance with the invention, the compression means comprise, near each longitudinal end of the flexible conduit, a rotating disk extending in an extension plane substantially orthogonal to the longitudinal axis of the flexible conduit, fixed fixing straps extending around and along the flexible conduit, the ends of each of the straps being fixed on the rotating disks facing each other, as well as means to drive in rotation at least one of the rotating disks.

According to an example of embodiment of the device in conformance with the invention, the driving means allow the rotating disks to be made to turn in reverse directions.

According to an example of embodiment of the device in conformance with the invention, at least one of the rotating disks is mobile in translation along the longitudinal axis of the flexible conduit at the same time as its movement in rotation.

According to an example of embodiment of the device in conformance with the invention, the rotating disk that is mobile in translation is connected to a support fixed through elastic means, which exert a return force on said rotating disk when it moves in translation.

According to an example of embodiment in conformance with the invention, the device comprises regulating and control means to determine and control the respective angle of rotation of each of the rotating disks.

According to an example of embodiment of the device in conformance with the invention, the regulating and control means control the displacement in translation and determine the maximum stroke in translation of the disk that is mobile in translation.

According to an example of embodiment of the device in conformance with the invention, the straps distributed circumferentially around the flexible conduit preferably present a width of for example between 0,5 and 200 mm. It is clear that this width can depend on the size of the product to be mold.

According to an example of embodiment of the device in conformance with the invention, the device preferably comprises a number of straps depending on the size of the part or product and on the searched surface quality of the part or product and also on the achieved pressure on the reinforcement laminate with the molding device.

According to an example of embodiment of the device in conformance with the invention, the straps are elastic or partly elastic. In some cases, a bending and torsion elasticity could be interesting.

According to an example of embodiment of the device in conformance with the invention, the straps are connected to the rotating disks through articulation means, of the swivel joint type, to prevent twisting of said straps during rotation of the rotating disks.

The wording "matrix" which is well known, is generally used in the following, but the term "resin" which is more specific could also be used without departing from the invention. According to the invention, the matrix is a liquid duroplast material or a liquid thermoplast material.

According to an example of embodiment of the device in conformance with the invention, the means to generate the flow of matrix or matrix in the matrix-circulation space comprise a rotation and twisting means. The pressure is build up during the rotation and twisting of the straps. The pressure needed to bring the matrix or the matrix to the impregnation position is very not high. A pressure of about 0,5 bar should be enough to bring the matrix in the right place before the activation of the rotation and twisting means.

According to an example of embodiment of the device in conformance with the invention, the means to generate the flow of matrix or resin in the matrix-circulation space comprise a vacuum source communicating with the evacuation end piece.

The device in conformance with the invention thus allows the matrix or resin circulation to be locally modulated and to be adapted to particular constraints by optimizing the shape and dimensions of the matrix or resin circulation slot. The pressure on the laminate could be in some cases be reduced or increased locally by reducing or increasing the tension force on the straps for a determined number of windings of the straps around the flexible conduit.

According to an example of embodiment of the device in conformance with the invention, the straps could comprise parts with different elasticity properties in order to locally reduce or increase the tension force on the straps.

The impregnation device in conformance with the invention presents the enormous advantage of enabling impregnation to be performed in a single simple and quick operation. In fact, resorting to pre-impregnation steps is pointless.

The device in conformance with the invention allows a reproducible manufacturing quality to be obtained, which is perfectly adapted to manufacturing pieces in series.

In addition, the pieces obtained with the device in conformance with the invention only necessitate very little finishing work. If a high number of narrow straps are used, the quality of the molded surface will be better.

The device in conformance with the invention also allows the quantity of matrix or resin, which is used for molding the piece, to be adapted and therefore the consumption of said matrix or resin, to be reduced. Only the needed quantity of matrix or resin, is inserted into the molding device.

Also, with the device in conformance with the invention, one can avoid using impregnation media, which generally are not reusable. Thus, the reusable device in conformance with the invention presents ecological qualities.

The device in conformance with the invention allows fibre-reinforced high-performance materials and, in particular, high-performance hollow pieces presenting a low voidage constitution to be made.

Due to the orthogonal forces applied on the conduit by the straps, no jointing operation between different reinforcement layers is necessary with the method in conformance with the invention. In particular, a shifting of a layer with respect to another layer can be avoided.

According to an example of embodiment of the device in conformance with the invention, the applied pressure with the straps, can be combined with an applied vacuum within the flexible conduit.

In addition, the device in conformance with the invention is adapted for the manufacture of laminar pieces with isotropic or orthotropic structures, that is, pieces that do not present isotropy at the level of their physical properties, of the resistance, density, elasticity or other type.

The act of using a flexible mold also facilitates the insertion of the core-preform sub-assembly into said mold.

The device in conformance with the invention also allows a preform that is manufactured separately and already presents the dimensions of the piece, for example the length of a shaft, to be used.

The core is advantageously delivered with the preform, which protects said core from possible impacts. The core is also reusable.

It should also be noted that the device in conformance with the invention enables an impregnation method to be implemented that does not expose the operators to handling matrix that is often corrosive.

The invention and its advantages will appear with more details in the context of the following description, with an example of embodiment given for illustrative purposes with reference to the attached figures that represent:
- Figure 1, an illustration of an example of implementation of an impregnation method by using matrix, according to the prior art,
- Figure 2, an illustration, partially in section, of an example of embodiment of a rotary impregnation device in conformance with the invention.

The structurally and functionally identical elements, present in several distinct figures, are assigned one and the same reference for all of the figures.

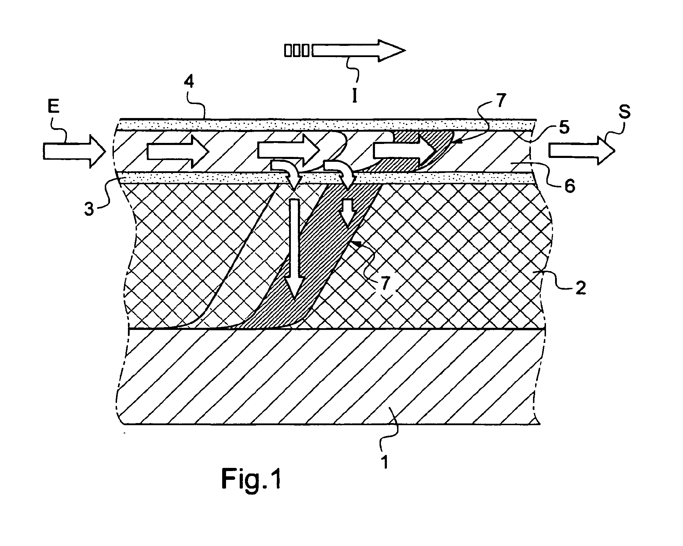

According to Figure 1, illustrating a known impregnation method, element 1 is used, of the piece to cover or core type, covered by a preform 2. This preform 2 is, for example, a semifinished product, whose structure, for example laminar, is based on textiles or fibre layers.

Preform 2 is wrapped in a separation fabric 3 that is permeable to impregnation matrix. A vacuum sheet 4 allows a matrix-circulation space 5 in which negative pressure (vacuum) is applied to be constituted with the separation fabric 3.

The matrix-circulation space 5 is filled during molding with a matrix type material such as a resin. The flow of matrix presents a circulation front 7 illustrated in Figure 1. The directions of introduction of the matrix and impregnation are respectively marked by the arrows E and I in Figure 1. An evacuation arrow S diagrams the expulsion of the surplus matrix.

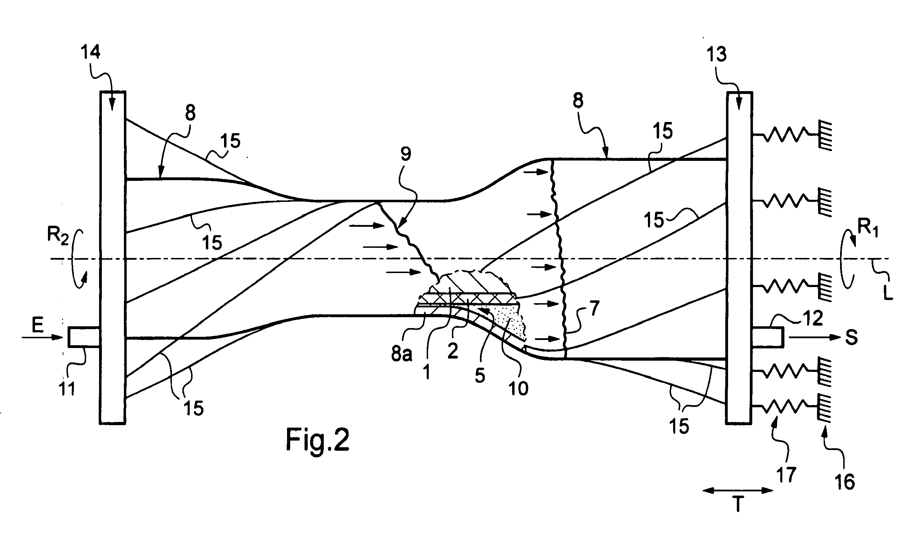

An example of embodiment of a rotary impregnation device in conformance with the invention is illustrated in Figure 2.

Mold 8 comprises a flexible conduit 8a and mechanical compression means of said flexible conduit 8a to shape a matrix-circulation space 5 according to the impregnation parameters. It thus becomes possible to size and shape a matrix-circulation space 5. The compression also promotes the circulation of a matrix 10 or resin, in the matrix-circulation space 5 as well as the impregnation of preform 2.

According to an example of embodiment of the invention, the matrix 10 is a liquid duroplast material or a liquid thermoplast material.

The flexible conduit is for example an elastomer.

According to an example of embodiment of the invention, the flexible conduit 8a defines an inner free space, substantially cylindrical before the deformation of said flexible conduit, for the engagement of element 1, of the piece or core type, covered with a reinforcement layer or with the preform 2.

The preform 2 may advantageously be constituted of a laminar assembly of textile or fibre layers.

The rotary device comprises the mold 8 extending around the reinforcement layer by defining the matrix-circulation space 5 of the matrix 10, at least one end piece 11 for supplying matrix 10 into the matrix-circulation space 5 and at least one end piece 12 for evacuating the surplus matrix 10.

The rotary device comprises compression means applied to the external surface of the flexible conduit 8a, to circumferentially compress the matrix-circulation space 5, according to the impregnation parameters, thus promoting impregnation of the reinforcement layer. The dimensions of the matrix-circulation space 5, in this case in an annular shape, the circulation speed of the matrix 10 as well as the pressure in the matrix-circulation space 5 may thus be adapted to the material constituting the piece, to the thickness or to the density of the preform 2.

According to an example of embodiment of the device in conformance with the invention, the compression means comprise, near each longitudinal end of the flexible conduit 8a, a rotating disk 13, 14 extending in an extension plane that is substantially orthogonal to the longitudinal axis L of the flexible conduit 8a.

The compression means also comprise fixing straps 15 extending around and along the flexible conduit 8a. The ends of each of the straps 15 are fixed on the rotating disks 13 and 14 facing each other.

A strap (15) is understood to refer to the broad meaning of a tenso-elastic or partly tenso-elastic strap, band, cord, cable or a kind of bowden cable.

The compression means also comprise means (not represented) to drive at least one of the rotating disks 13 and 14 in rotation.

According to an example of embodiment of the device in conformance with the invention, the driving means allow the rotating disks 13 and 14 to be made to turn in reverse directions R1 and R2.

According to an example of embodiment of the device in conformance with the invention, at least one of the rotating disks 13, 14 is mobile in translation along the longitudinal axis L of the flexible conduit 8a at the same time as its movement in rotation. This displacement in translation is diagrammed by the arrow T.

The rotating disk 13, mobile in translation is, for example, connected to a fixed support 16 through elastic means 17, which exert a return force on said rotating disk 13. The elastic means 17 are, for example, springs or any equivalent elastic system.

The rotary device in conformance with the invention advantageously comprises regulating and control means to determine and control the respective angle of rotation of each of rotating disks 13, 14.

According to an example of embodiment of the device in conformance with the invention, the regulating and control means also control the displacement in translation and determine the maximum stroke in translation of the rotating disk 13 that is mobile in translation.

According to an example of embodiment of the device in conformance with the invention, the straps 15 circumferentially distributed around the flexible conduit 8a preferably present a width of between 0,5 and 200 mm. It is clear that this width can depend on the size of the product to be mold.

According to an example of embodiment in conformance with the invention, the device preferably comprises a number of straps depending on the size of the part or product and on the searched surface quality of the part or product and also depending on the achieved pressure on the reinforcement laminate with the molding device.

According to an example of embodiment of the device in conformance with the invention, the straps 15 are elastic.

According to an example of embodiment of the device in conformance with the invention, the straps 15 are connected to the rotating disks 13, 14 through articulation means, of the swivel joint type, to prevent twisting of said straps during rotation of the rotating disks 13, 14.

The rotary impregnation device also comprises means (not represented) to generate a flow of matrix 10 in the matrix-circulation space 5.

According to an example of embodiment in conformance with the invention, the means to generate the flow of matrix in the matrix-circulation space 5 need no matrix pressurization unit, communicating with the supply end piece 11.

According to an example of embodiment in conformance with the invention, the means to generate the flow of resin in the circulation space 5 in order to insert a determined quantity of matrix 10 into the conduit 8a, comprise a resin pressurization unit, communicating with the supply end piece 11. According to another example of embodiment in conformance with the invention, the means to generate the flow of matrix 10 in the matrix-circulation space 5 comprise a vacuum source communicating with the evacuation end piece 12.

The rotary device in conformance with the invention is particularly simple in its constitution as well as in its operation.

In fact, mold 8 is inserted between the rotating disks 13 and 14. The straps 15 then extend parallel to the flexible conduit 8a between the rotating disks 13 and 14. A vacuum source allows the matrix 10 to be pumped in the matrix-circulation space 5. Then, the rotating disks 13 and 14 are rotated along directions R1 and R2 so as to wind the straps 15 around the flexible conduit 8a by compressing said flexible conduit 8a. A circulation front 7 is then obtained in the matrix-circulation space 5. The level of compression of the matrix-circulation space 5 is advantageously adapted to the preform 2 or to the product to impregnate.

To be specified by the inventor, if the compression of the flexible conduit initially goes from the middle towards the two disks, is there a risk of matrix being expelled by the input end piece?

Figure 2 illustrates also the start of a compressed zone 9 in which the level of maximum compression has been reached.

Naturally, the present invention is subject to numerous variations regarding its embodiment or implementation. Of course, although several embodiments or implementations have been described, it is clearly understood that it is not conceivable to exhaustively identify all possible modes.

## Claims

1. A molding device by impregnation of at least one reinforcing layer constituting a piece to be molded or at least one reinforcing layer covering a piece, with a matrix (10) in liquid form, said device comprising a mold (8) extending around the reinforcing layer by defining a matrix-circulation space (5), at least one end piece (11) for supplying matrix (10) into the matrix-circulation space (5), at least one end piece for evacuating (12) surplus matrix (10) as well as means for generating a flow of matrix in the matrix-circulation space (5),
**characterized in that** a rotary device is provided comprising the mold (8) with a flexible conduit (8a) and compression means applied to the outer surface of the flexible conduit (8a) to circumferentially compress the matrix-circulation space (5), according to the impregnation parameters, thus promoting impregnation of the reinforcing layer.

2. The device according to claim 1,
**characterized in that** the flexible conduit (8a) is an elastomer.

3. The device according to any one of the previous claims,
**characterized in that** the flexible conduit (8a) defines a free inner space, substantially cylindrical before compression of said flexible conduit (8a), for the engagement of an element (1) or a piece of the mold core type covered by a reinforcing layer.

4. The device according to any one of the previous claims,
**characterized in that** the compression means comprise, near each longitudinal end of the flexible conduit (8a), a rotating disk (13, 14) extending in an extension plane substantially orthogonal to the longitudinal axis L of the flexible conduit (8a), fixed fixing straps (15) extending around and along the flexible conduit (8a), the ends of each of the straps (15) being fixed on the rotating disks (13, 14) facing each other, as well as means for driving in rotation at least one of the rotating disks (13, 14).

5. The device according to claim 4,
**characterized in that** the driving means allow the rotating disks (13, 14) to be made to turn in reverse directions.

6. The device according to claim 4 or 5,
**characterized in that** at least one of the rotating disks is mobile in translation along the longitudinal axis L of the flexible conduit (8a) at the same time as its movement in rotation.

7. The device according to claim 6,
**characterized in that** the rotating disk (13) that is mobile in translation is connected to a fixed support (16) through elastic means (17) which exert a return force on said rotating disk (13) when it moves in translation.

8. The device according to any one of claims 4 to 7,
**characterized in that** the device comprises regulating and control means to determine and control the respective angle of rotation of each of the rotating disks (13, 14).

9. The device according to claim 8,
**characterized in that** the regulating and control means control the displacement in translation and determine the maximum stroke in translation of the rotating disk (13) that is mobile in translation.

10. The device according to any one of claims 4 to 9,
**characterized in that** the straps (15) circumferentially distributed around the flexible conduit (8a) preferably present a width of between 0,5 and 200 mm.

11. The device according to any one of claims 4 to 11, **characterized in that** the straps (15) are at least partly elastic.

12. The device according to any one of claims 1 to 11,
**characterized in that** the straps (15) are connected to the rotating disks (13, 14) through articulation means, of the swivel joint type, to prevent twisting of said straps (15) during rotation of the rotating disks (13, 14).

13. The device according to any one of claims 1 to 12,
**characterized in that** the means for generating the flow of matrix (10) in the matrix-circulation space (5) are associated with a matrix (10) pressurization unit communicating with the supply end piece (11) for inserting a determined quantity of matrix (10) into the conduit (8a) before activating the compression means.

14. The device according to any one of claims 1 to 13,
**characterized in that** the means for generating the flow of matrix (10) in the matrix-circulation space (5) comprise a vacuum source communicating with the evacuation end piece (12).

## Patentansprüche

1. Vorrichtung zum Formen eines Teils durch Imprägnierung mindestens einer Verstärkungsschicht, welche das zu formende Teil bildet, oder durch Imprägnierung mindestens einer Verstärkungsschicht, die ein Teil bedeckt, mit einer Matrix (10) in flüssiger Form, wobei die Vorrichtung eine Gießform (8) aufweist, die sich um die Verstärkungsschicht herum erstreckt und einen Matrixzirkulationsraum (5) definiert, mit mindestens einem Endstück (11) zum Einspeisen der Matrix (10) in den Matrixzirkulationsraum (5), mindestens einem Endstück (12) zum Ablassen überschüssiger Matrix (10), sowie mit Mitteln zum Erzeugen eines Matrixflusses in dem Matrixzirkulationsraum (5),
**dadurch gekennzeichnet, dass** eine Drehvorrichtung vorgesehen ist, die die Gießform (8) mit einem flexiblen Rohr (8a) umfasst sowie Druckerzeugungsmittel, die Druck auf die äußere Oberfläche des flexiblen Rohrs (8a) ausüben, um den Matrixzirkulationsraum (5) nach Maßgabe der Imprägnierungsparameter umfangsmäßig zu komprimieren, um somit die Imprägnierung der Verstärkungsschicht zu begünstigen.

2. Vorrichtung nach Anspruch 1,
**dadurch gekennzeichnet, dass** das flexible Rohr (8a) aus einem Elastomer besteht.

3. Vorrichtung nach einem der vorstehenden Ansprüche,
**dadurch gekennzeichnet, dass** das flexible Rohr (8a) einen freien inneren Raum definiert, der vor der Kompression des flexiblen Rohrs (8a) eine im Wesentlichen zylindrische Form hat, für den Eingriff eines Elements (1) oder eines Teils des Gießformkerns, der mit einer Verstärkungsschicht bedeckt ist.

4. Vorrichtung nach einem der vorstehenden Ansprüche,
**dadurch gekennzeichnet, dass** die Druckerzeugungsmittel nahe eines jeden Längsendes des flexiblen Rohrs (8a) eine Drehscheibe (13, 14) aufweisen, die sich in einer im Wesentlichen senkrecht zur Längsachse L des flexiblen Rohrs (8a) verlaufenden Ebene erstreckt, wobei sich Befestigungsstreifen (15) um und entlang des flexiblen Rohrs (8a) erstrecken, wobei die Enden eines jeden Streifens (15) an den Drehscheiben (13, 14), die sich gegenüberliegen, befestigt sind, und wobei die Vorrichtung ferner Mittel zum Drehen mindestens einer der Drehscheiben (13, 14) aufweist.

5. Vorrichtung nach Anspruch 4,
**dadurch gekennzeichnet, dass** die Mittel zum Drehen der Drehscheiben (13, 14) diese in entgegengesetzte Drehrichtungen antreiben.

6. Vorrichtung nach Anspruch 4 oder 5,
**dadurch gekennzeichnet, dass** wenigstens eine der Drehscheiben entlang der Längsachse L des flexiblen Rohrs (8a) translatorisch beweglich ist, während sich die Drehscheibe gleichzeitig dreht.

7. Vorrichtung nach Anspruch 6,
**dadurch gekennzeichnet, dass** die Drehscheibe (13), die translatorisch beweglich ist, mit einem festen Träger (16) über elastische Mittel (17) verbunden ist, die auf die Drehscheibe (13) eine Rückstellkraft ausüben, während diese sich translatorisch bewegt.

8. Vorrichtung nach einem der Ansprüche 4 bis 7,
**dadurch gekennzeichnet, dass** die Vorrichtung Regel- und Steuermittel aufweist zum Bestimmen und zum Steuern des jeweiligen Drehwinkels jeder der Drehscheiben (13, 14).

9. Vorrichtung nach Anspruch 8,
**dadurch gekennzeichnet, dass** die Regel- und Steuermittel die translatorische Verschiebung steuern und den maximalen Translationshub der Drehscheibe (13) bestimmen, die translatorisch beweglich ist.

10. Vorrichtung nach einem der Ansprüche 4 bis 9,
**dadurch gekennzeichnet, dass**
die Streifen (15), die umfangsmäßig um das flexible Rohr (8a) verteilt sind, vorzugsweise eine Breite zwischen 0,5 und 200 mm aufweisen.

11. Vorrichtung nach einem der Ansprüche 4 bis 11,
**dadurch gekennzeichnet, dass** die Streifen (15) zumindest teilweise elastisch sind.

12. Vorrichtung nach einem der Ansprüche 1 bis 11,
**dadurch gekennzeichnet, dass** die Streifen (15) mit den Drehscheiben (13, 14) über Gelenkmittel vom Drehlagerverbindungstyp verbunden sind, um ein Verdrillen der Streifen (15) während der Drehung der Drehscheiben (13, 14) zu vermeiden.

13. Vorrichtung nach einem der Ansprüche 1 bis 12,
**dadurch gekennzeichnet, dass** die Mittel zur Erzeugung eines Matrixflusses im Matrixzirkulationsraum (5) mit einer Matrixdruckpumpe verbunden sind, die an dem Einspeiseendstück (11) verbunden ist zum Einspeisen einer bestimmten Menge an Matrix (10) in die Leitungen (8a), bevor die Pumpe aktiviert wird.

14. Vorrichtung nach einem der Ansprüche 1 bis 13,
**dadurch gekennzeichnet, dass** die Mittel zur Erzeugung eines Matrixflusses in dem Matrixzirkulationsraum (5) eine Vakuumpumpe aufweisen, die mit dem Ablassendstück (12) verbunden ist.

## Revendications

1. Dispositif de moulage par imprégnation d'au moins une couche de renforcement constituant une pièce à mouler ou d'au moins une couche de renforcement recouvrant une pièce, avec une matrice (10) sous forme liquide, ledit dispositif comprenant un moule (8) s'étendant autour de la couche de renforcement en définissant un espace de circulation de matrice (5), au moins un embout (11) pour alimenter en matrice (10) l'espace de circulation de matrice (5), au moins un embout (12) pour évacuer l'excédent de matrice (10), ainsi que des moyens pour générer un courant de matrice dans l'espace de circulation de matrice (5),
**caractérisé en ce qu'**est pourvu un dispositif rotatif comprenant le moule (8) avec un conduit flexible (8a) et des moyens de compression appliqués à la surface extérieure du conduit flexible (8a) pour comprimer circonférentiellement l'espace de circulation de matrice (5), selon les paramètres d'imprégnation, favorisant ainsi l'imprégnation de la couche de renforcement.

2. Dispositif selon la revendication 1,
**caractérisé en ce que** le conduit flexible (8a) est un élastomère.

3. Dispositif selon l'une quelconque des revendications précédentes, **caractérisé en ce que** le conduit flexible (8a) définit un espace intérieur libre, sensiblement cylindrique avant déformation dudit conduit flexible (8a), pour l'engagement d'un élément (1) ou d'une pièce du type noyau de moule recouvert par une couche de renforcement.

4. Dispositif selon l'une quelconque des revendications précédentes,
**caractérisé en ce que** les moyens de compression comprennent, près de chaque extrémité longitudinale du conduit flexible (8a), un disque rotatif (13, 14) s'étendant dans un plan d'extension sensiblement orthogonal à l'axe longitudinal L du conduit flexible (8a), des sangles de fixation fixes (15) s'étendant autour et le long du conduit flexible (8a), les extrémités de chacune des sangles (15) étant fixées sur les disques rotatifs (13, 14) se faisant face, ainsi que des moyens pour entraîner en rotation l'un au moins des disques rotatifs (13, 14).

5. Dispositif selon la revendication 4,
**caractérisé en ce que** les moyens d'entraînement permettent de faire tourner les disques rotatifs (13, 14) dans des directions contraires.

6. Dispositif selon la revendication 4 ou 5,
**caractérisé en ce que** l'un au moins des disques rotatifs est mobile en translation le long de l'axe longitudinal L du conduit flexible (8a) en même temps que son mouvement en rotation.

7. Dispositif selon la revendication 6,
**caractérisé en ce que** le disque rotatif (13) qui est mobile en translation est relié à un support fixe (16) par des moyens élastiques (17) qui exercent une force de retour sur ledit disque rotatif (13) quand il se déplace en translation.

8. Dispositif selon l'une quelconque des revendications 4 à 7,
**caractérisé en ce que** le dispositif comprend des moyens de régulation et de commande pour déterminer et contrôler l'angle de rotation respectif de chacun des disques rotatifs (13, 14).

9. Dispositif selon la revendication 8,
**caractérisé en ce que** les moyens de régulation et de commande contrôlent le déplacement en translation et déterminent la course maximale en translation du disque rotatif (13) qui est mobile en translation.

10. Dispositif selon l'une quelconque des revendications 4 à 9,
**caractérisé en ce que** les sangles (15) distribuées circonférentiellement autour du conduit flexible (8a) présentent de préférence une largeur comprise entre 0,5 et 200 mm.

11. Dispositif selon l'une quelconque des revendications 4 à 11,
**caractérisé en ce que** les sangles (15) sont au moins partiellement élastiques.

12. Dispositif selon l'une quelconque des revendications 1 à 11,
**caractérisé en ce que** les sangles (15) sont reliées aux disques rotatifs (13, 14) par des moyens d'articulation, du type joint à rotule, pour empêcher la torsion desdites sangles (15) pendant la rotation des disques rotatifs (13, 14).

13. Dispositif selon l'une quelconque des revendications 1 à 12,
**caractérisé en ce que** les moyens pour générer le courant de matrice (10) dans l'espace de circulation de matrice (5) sont associés à une unité de pressurisation de matrice (10) communiquant avec l'embout d'alimentation (11) pour insérer une quantité déterminée de matrice (10) dans le conduit (8a) avant d'activer les moyens de compression.

14. Dispositif selon l'une quelconque des revendications 1 à 13,
**caractérisé en ce que** les moyens pour générer le courant de matrice (10) dans l'espace de circulation de matrice (5) comprennent une source de vide communiquant avec l'embout d'évacuation (12).
